# EUROPEAN PATENT SPECIFICATION

(11) **EP 1 230 856 B1**
(45) Date of publication and mention of the grant of the patent: **19.10.2005**
(21) Application number: 01440027.9
(22) Date of filing: 08.02.2001
(51) Int. Cl.: A01N 31/02, A01N 37/02

(54) **Sexual attractant for citrus borer moth**
Sexuallockstoff für die Zitrusmotte
Attractif sexuel pour la teigne des agrumes

(43) Date of publication of application: 14.08.2002
(73) Proprietor: FUJI FLAVOR CO., LTD., Tokyo 205-0003 (JP)
(72) Inventor: Ono, Mikio, c/o Fuji Flavor Company, Ltd., Hamura-shi, Tokyo 205-0003 (JP); Murata, Yasuhiro, c/o Fuji Flavor Company, Ltd., Hamura-shi, Tokyo 205-0003 (JP); Bento, José Mauricio S., c/o Universidade de, 13418-900 Piracicaba SP (BR); Leal, Walter Soares, Davis, CA 95616 (US); Vilela, Evaldo Ferreira, the Federal University, 36571-000 Vicosa-MG (BR); Parra, José Roberto P., c/o Universidade de, 13418-900 Piracicaba SP (BR); Ayres, Antonio Juliano, c/o Fundecitrus, Melhado-Araraquara SP, Sao Paulo (BR)
(74) Representative: Littolff, Denis

(56) References cited:
- WO-A-01/22815
- FR-A- 2 317 272
- BOOIJ, C. J. H. ET AL: "Conifer-infesting tortricids in Western Europe: a search for more potent and selective sex attractants" J. APPL. ENTOMOL. (1986), 102(3), 253-9 , XP001020895
- DATABASE WPI Section Ch, Week 200137 Derwent Publications Ltd., London, GB; Class C03, AN 2001-348439 XP002175369 & JP 2001 081002 A (FUJI FLAVOR CO LTD), 27 March 2001 (2001-03-27)

## Description

### Field of the invention

The present invention relates to a sexual attractant capable of being advantageously used to foreknow, prevent and exclude generation of citrus borer moth scientifically named *'Ecdytolopha aurantiana'.*

### Prior art and problems to be solved by the invention

Citrus borer moth is a kind of lepidoptera in the family of tortricidae. It generates all over Brazil and other countries in Latin America, doing much harm e.g. to oranges. It is very difficult to foresee, prevent or exclude damages due to generation of citrus borer moths by means of conventional insecticides.

In view of the above current situation, it is strongly needed to establish working methods, other than conventional insecticides, for precise prediction, prevention and exclusion of damages by citrus borer moths.

On the other hand, sexual and gathering pheromones of many kinds of noxious insects such as moths in particular have been so far elucidated in chemical structure.

Moreover, generation and growth of some kinds of noxious insects can be effectively researched now thanks to the above pheromone agents, while methods for exclusion of those noxious insects are being developed to capture a number of imagos or disturb the males and females in their mating behavior by means of those attractants.

However, no sexual attractant for citrus borer moth had been known yet.

Therefore, it have been desired to obtain a sexual attractant excellent in attracting citrus borer moths and advantageous in preventing them from doing harm.

### Means to solve the problems

In the above background, the present inventors made researches in citrus borer moths to find in the female imagos a substance attractive to male imagos, elucidate the chemical structure of active ingredients thereof, and synthesize a chemical compound having the same chemical structure. The present invention has been completed on finding thus synthesized chemical compound to be advantageously attractive to citrus borer more moth male imagos. In this respect, it has been found that (E)-8-dodecenyl acetate and (E)-8-dodecenol are efficient attractants for such moths.

Sexual attractants containing as an active ingredient (E)-8-dodecenyl acetate are however already known : the PCT application WO 01/22815 (Bayer Aktiengesellschaft) relates to the use of alkanoic acid alkyl ester compounds such as (E)-8-dodecenyl acetate as bait for female codling moths and to agents and devices that contain such attractants.

Also, sexual attractants containing as an active ingredient (E)-8-dodecenol have already been disclosed, for instance in the French patent FR-2 317 272, which mentions the use of such an ingredient for attracting Cryptophlebia Leucotreta and Grapholita Packardi.

Furthermore, sexual attractants containing as active ingredients at the same time (E)-8-dodecenyl acetate and (E)-8-dodecenol have been described in an article of BOOIJ, C. J. and al. called "Conifer-infesting tortricids in Western Europe : a search for more potent and selective sex attractants" and published in J. APPL. ENTOMOL. (1986), 102(3), 253-9 as attractive compounds for Cydia Coniferana.

However, nothing has been described for solving the problem specifically posed herein, i.e. attracting citrus borer moth male imagos.

According to the invention, this is now made through the use of a composition containing (E)-8-dodecenyl acetate and (E)-8-dodecenol.

To be more precise, the composition used as sexual attractant for citrus borer moth contains as active ingredients (E)-8-dodecenyl acetate and (E)-8-dodecenol mixed at a (E)-8-dodecenyl acetate to (E)-8-dodecenol ratio ranging from 100:1 to 1:1.

Even more precisely, according to the invention, a sexual attractant for citrus borer moth containing as active ingredients (E)-8-dodecenyl acetate and (E)-8-dodecenol mixed at a (E)-8-dodecenyl acetate to (E)-8-dodecenol ratio of 10:1 is used.

Finally, the sexual attractant for citrus borer moth containing as active ingredients (E)-8-dodecenyl acetate and (E)-8-dodecenol is used for instance held by a plastic device or a rubber septum.

The active ingredients of sexual attractant for citrus borer moth of the present invention i.e. (E)-8-dodecenyl acetate and (E)-8-dodecenol both work very well in combined use to attract and stimulate actions of citrus borer moth male imagos.

The conventional formulation technique currently applied to preparation of usual sexual attractants can be used also to prepare the sexual attractant of the present invention from (E)-8-dodecenyl acetate and (E)-8-dodecenol.

For example, (E)-8-dodecenyl acetate and (E)-8-dodecenol can be dissolved as they are or by organic solvents such as dichloromethane to make a solution which is to be absorbed by an appropriate plastic device e.g. a septum of polyethylene plastic or rubber to form a practical sexual attractant.

The sexual attractant of the present invention is advantageous to prevent generation of citrus borer moths and exclude their presence.

Citrus borer moth, here referred to in the invention of the subject application, is a kind of moth in the family of tortricidae to be called "citrus borer moth" in English, scientifically named *"Ecdytolopha aurantiana"* and "bicho frao" in Portuguese.

The sexual attractant of the present invention attracts very much citrus borer moth male imagos to be advantageously helpful in preventing generation of citrus borer moths and excluding their presence.

### Mode for carrying out the invention

Now, explanation will be made about the mode for carrying into application the sexual attractant for citrus borer moth of the present invention and examples thereof.

To start with, attracting ingredients of citrus borer moth were collected and identified in the following way.

In July 1998, citrus borer moth female imagos were collected in an orange plantation in San Paulo, Brazil and their bodies were immersed into an n-hexane solution between 6:00 p.m. and 8:00 p.m. to obtain extracts.

Thus obtained extracts were developed by silica gel column chromatography with a hexane-ether mixed solvent where hexane:ether=100:0, 95:5, 90:10, 80:20, 50:50, 0:100. Then, fractions of hexane-ether mixed solvent at ratios of 95:5, 90:10 and 80:20 were found to be active.

Fractions of hexane-ether mixed solvent at ratios of 95:5 and 90:10 were found here to be active to attract male imagos.

On the other hand, fractions of hexane-ether mixed solvent at a ratio of 80:20 caused them to flutter.

Moreover, mixture of both the above fractions attracted them much more, causing them to make violent mating behaviors even among fellow males.

Fractions of hexane-ether mixed solvent at ratios of 95:5 and 90:10 and at a ratio of 80:20 were analyzed by GC-MS and tracer GC-FTIR.

The above analysis suggested the presence of acetate and double bonds of trans structure in fractions of hexane-ether mixed solvent at ratios of 95:5 and 90:10, while suggesting the presence of hydroxyl radicals and double bonds of trans structure in those at a ratio of 80:20.

In addition, both fractions proved to be monoene of (E)-8 by mass spectrum of DMDS derivatives.

As a result, it has been confirmed that fractions of hexane-ether mixed solvent at ratios of 95:5 and 90:10 are (E)-8-dodecenyl acetate and those at a ratio of 80:20 are (E)-8-dodecenol.

On the other hand, separately synthesized (E)-8-dodecenyl acetate and (E)-8-dodecenol were compared with the above natural active ones. Then, the synthesized products and the natural active equivalents were found to coincide in structure.

### Example 1

(E)-8-dodecenyl acetate and (E)-8-dodecenol were mixed at a ratio of 100:1 to prepare sexual attractant 1 of the present invention.

Pellets of ethylene-vinyl acetate copolymer were impregnated with 1 mg of the above sexual attractant 1 to obtain sexual attractant 11.

### Example 2

(E)-8-dodecenyl acetate and (E)-8-dodecenol were mixed at a ratio of 10:1 to prepare sexual attractant 2 of the present invention.

Pellets of ethylene-vinyl acetate copolymer were impregnated with 1 mg of the above sexual attractant 2 to obtain sexual attractant 21.

### Example 3

(E)-8-dodecenyl acetate and (E)-8-dodecenol were mixed at a ratio of 1:1 to prepare sexual attractant 3 of the present invention.

Pellets of ethylene-vinyl acetate copolymer were impregnated with 1 mg of the above sexual attractant 3 to obtain sexual attractant 31.

### Test 1

Zone 1 of the present invention was arranged with 10 sets of adhesive insect traps, made by Japan Tobacco Inc., where sexual attractant 11 obtained in the above Example 1 was applied.

Zone 2 of the present invention was arranged with 10 sets of adhesive insect traps, made by Japan Tobacco Inc., where sexual attractant 21 obtained in the above Example 2 was applied.

Zone 3 of the present invention was arranged with 10 sets of adhesive insect traps, made by Japan Tobacco Inc., where sexual attractant 31 obtained in the above Example 3 was applied.

Comparative zone 1 was arranged with 10 sets of adhesive insect traps, made by Japan Tobacco Inc., each fixing a plastic case containing two citrus borer moth virgin females alive.

Comparative zone 2 was arranged with 10 sets of adhesive insect traps, made by Japan Tobacco Inc., each containing empty pellets impregnated with nothing.

The above traps were used to carry out a test to capture male imagos in an orange plantation in San Paulo, Brazil from the 20th to 24th of November 1998, keeping the same environmental conditions, and to count citrus borer moth male imagos captured at an average in each of the above zones.

The above test resulted in the following:
24 moths per day per trap were captured at an average in zone 1 of the present invention.
35 moths per day per trap were captured at an average in zone 2 of the present invention.
18 moths per day per trap were captured at an average in zone 3 of the present invention.
12 moths per day per trap were captured at an average in comparative zone 1.
0.5 moths per day per trap were captured at an average in comparative zone 2.

As observed from the above results, it has been confirmed that mixture of (E)-8-dodecenyl acetate and (E)-8-dodecenol tends to have a higher attracting effect when mixed at a ratio in the proximity of 10:1.

Observation of the above test results is summarized to prove that sexual attractants of the present invention have an extremely high effect in attracting citrus borer moth male imagos.

## Claims

1. Use of a composition containing (E)-8-dodecenyl acetate and (E)-8-dodecenol for attracting citrus borer moth male imagos.

2. Use of the composition for attracting citrus borer moth male imagos_acoording to claim 1, wherein the ratio of (E)-8-dodecenyl acetate to (E)-8-dodecenol is ranging from 100:1 to 1:1.

3. Use of the composition for attracting citrus borer moth male imagos according to claim 1, wherein the ratio of (E)-8-dodecenyl acetate to (E)-8-dodecenol is 10:1.

4. Use of the composition for attracting citrus borer moth male imagos according to any one of claims 1-3, wherein the said composition is held by a plastic device or a rubber septum.

## Patentansprüche

1. Verwendung einer Mischung, die (E)-8-Dodecenylacetat und (E)-8-Dodecenol enthält, zum Anlocken männlicher Imagines der Zitrusmotte.

2. Verwendung der Mischung zum Anlocken männlicher Imagines der Zitrusmotte nach Anspruch 1, wobei das Verhältnis von (E)-8-Dodecenylacetat zu (E)-8-Dodecenol im Bereich von 100:1 bis 1:1 liegt.

3. Verwendung der Mischung zum Anlocken männlicher Imagines der Zitrusmotte nach Anspruch 1, wobei das Verhältnis von (E)-8-Dodecenylacetat zu (E)-8-Dodecenol 10:1 ist.

4. Verwendung der Mischung zum Anlocken männlicher Imagines der Zitrusmotte nach einem der Ansprüche 1-3, wobei sich die Mischung in einer Plastikanordnung oder einem Gummiseptum aufbewahrt wird.

## Revendications

1. Utilisation d'une composition contenant de l'acétate de (E)-8-dodécényle et du (E)-8-dodécénol pour attirer les imagos mâles de la mineuse des agrumes.

2. Utilisation de la composition pour attirer les imagos mâles de la mineuse des agrumes selon la revendication 1, dans laquelle le ratio de l'acétate de (E)-8-dodécényle sur le (E)-8-dodécénol se situe dans la plage de 100:1 à 1:1.

3. Utilisation de la composition pour attirer les imagos mâles de la mineuse des agrumes selon la revendication 1, dans laquelle le ratio de l'acétate de (E)-8-dodécényle sur le (E)-8-dodécénol est égale à 10:1.

4. Utilisation de la composition pour attirer les imagos mâles de la mineuse des agrumes selon l'une quelconque des revendications 1 à 3, dans laquelle ladite composition est maintenue par un dispositif en matière plastique ou un septum en caoutchouc.
